(19) Europäisches Patentamt / European Patent Office / Office européen des brevets

(11) **EP 2 695 869 B1**

## (12) EUROPEAN PATENT SPECIFICATION

(45) Date of publication and mention
of the grant of the patent:
**29.07.2015 Bulletin 2015/31**

(21) Application number: **12763680.1**

(22) Date of filing: **16.03.2012**

(51) Int Cl.:
***C04B 35/468*** [(2006.01)]     ***H01C 7/02*** [(2006.01)]

(86) International application number:
**PCT/JP2012/056837**

(87) International publication number:
**WO 2012/132954 (04.10.2012 Gazette 2012/40)**

(54) **SEMICONDUCTOR CERAMIC, AND POSITIVE TEMPERATURE COEFFICIENT THERMISTOR**

HALBLEITERKERAMIK UND THERMISTOR MIT POSITIVEM TEMPERATURKOEFFIZIENTEN

CÉRAMIQUE SEMI-CONDUCTRICE ET THERMISTOR À COEFFICIENT DE TEMPÉRATURE POSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2011 JP 2011076060**

(43) Date of publication of application:
**12.02.2014 Bulletin 2014/07**

(73) Proprietor: **Murata Manufacturing Co., Ltd.
Kyoto 617-8555 (JP)**

(72) Inventors:
• **GOTO, Masato
Nagaokakyo-shi
Kyoto 617-8555 (JP)**

• **MATSUNAGA, Tatsuya
Nagaokakyo-shi
Kyoto 617-8555 (JP)**

(74) Representative: **Thoma, Michael et al
Lorenz - Seidler - Gossel
Rechtsanwälte Patentanwälte Partnerschaft mbB
Widenmayerstraße 23
80538 München (DE)**

(56) References cited:
**WO-A1-2008/152976     WO-A1-2010/067865
WO-A1-2010/067867     WO-A1-2010/067868
WO-A1-2010/140653     JP-A- 2000 264 726
JP-A- 2002 029 836     JP-A- 2002 029 839
JP-A- 2009 177 017**

**Description**

TECHNICAL FIELD

The present invention relates to a semiconductor ceramic, and more particularly, to a semiconductor ceramic that has a positive temperature coefficient (Positive Temperature Coefficient; hereinafter, referred to as "PTC characteristics"). In addition, the present invention relates to a positive temperature coefficient thermistor using the semiconductor ceramic.

BACKGROUND ART

Barium titanate ($BaTiO_3$) based semiconductor ceramics have PTC characteristics of generating heat by applied voltage and rapidly increasing the resistance value in excess of the Curie point Tc for the phase transition from tetragonal to cubic. The semiconductor ceramics have been widely used for applications such as heaters, motor activation, etc., through the use of the PTC characteristics.

For example, Patent Document 1 discloses, as a semiconductor ceramic that has PTC characteristics, a semiconductor ceramic containing, as main constituents, $BaTiO_3$, $SrTiO_3$, $CaTiO_3$, and $PbTiO_3$ in definite proportions.

PRIOR ART DOCUMENTS

PATENT DOCUMENTS

Patent Document 1: JP 4-170361 A

DISCLOSURE OF THE INVENTION

Problem to be solved by the invention

However, the semiconductor ceramic disclosed in Patent Document 1 contains lead. The development of non-lead semiconductor ceramics containing substantially no lead has been required in consideration of environmental aspect, because lead is a substance of concern. In addition, PTC thermistors for use in the application of motor activation are required to have resistance to high voltages (voltage resistance), because the electromotive force produced by electromagnetic induction in the motor activation is further applied to the PTC thermistors, besides the working voltage.

The present invention has been achieved in view of these issues, an object of the present invention is to provide a semiconductor ceramic containing substantially no substance of concern, which is excellent in voltage resistance, and a positive temperature coefficient thermistor element using the semiconductor ceramic as a component body.

Means for solving the problem

A semiconductor ceramic according to the present invention contains, as its main constituent, a compound represented by the general formula $(Ba_{1-(x+y+z)/100}Ca_{x/100}Sr_{y/100}SmC_{z/100})TiO_3$, where Smc represents a semiconductivity-imparting agent selected from the group consisting of Er, Dy, Y, Gd, Bi and Nd, and contains Mn in a proportion of t parts by mol with respect to 100 parts by mol of the main constituent, characteristically, the x, y, and t satisfy relationships of: $2.500 \leq x \leq 20.000$; $0.000 \leq y \leq 5.000$; $2.500 \leq x + y \leq 20.000$; and $0.030 \leq t \leq 0.150$, and $z \geq K \times [(30-x)(30-y)(1+15t)/\{125(20+y)\} + (5+3y)/200]$; with the provisos that K = 1 if Smc is Er; K = 0.84 if Smc is Dy or Y; K = 0.63 if Smc is Gd; K = 0.68 if Smc is Bi; and K = 0.42 if Smc is Nd.

Further, in the semiconductor ceramic according to the present invention, characteristically, the semiconductivity-imparting agent Smc is Er, a compound represented by the general formula $(Ba_{1-(x+y+z)/100}Ca_{x/100}Sr_{y/100}Er_{z/100})TiO_3$ is contained as its main constituent, Mn is contained in a proportion of t parts by mol with respect to 100 parts by mol of the main constituent, and the x, y, t and z satisfy relationships of: $2.500 \leq x \leq 20.000$; $0.000 \leq y < 5.000$; $2.500 \leq x + y \leq 20.000$, $0.030 \leq t \leq 0.150$; and $z \geq (30-x)(30-y)(1+15t)/\{125(20+y)\} + (5+3y)/200$.

Further, in the semiconductor ceramic according to the present invention, characteristically, the semiconductivity-imparting agent Smc is Dy, a compound represented by the general formula $(Ba_{1-(x+y+z)/100}Ca_{x/100}Sr_{y/100}Dy_{z/100})TiO_3$ is contained as its main constituent, Mn is contained in a proportion of t parts by mol with respect to 100 parts by mol of the main constituent, and the x, y, t and z satisfy relationships of: $2.500 \leq x \leq 20.000$; $0.000 \leq y \leq 5.000$; $2.500 \leq x + y \leq 20.000$, $0.030 \leq t \leq 0.150$; and $z \geq 0.84 \times [(30-x)(30-y)(1+15t)/\{125(20+y)\} +(5+3y)/200]$.

Further, in the semiconductor ceramic according to the present invention, characteristically, the semiconductivity-imparting agent Smc is Y, a compound represented by the general formula $(Ba_{1-(x+y+z)/100}Ca_{x/100}Sr_{y/100}z/100)TiO_3$ is contained as its main constituent, Mn is contained in a proportion of t parts by mol with respect to 100 parts by mol of the main constituent, and the x, y, t and z satisfy relationships of:

$$2.500 \leq x \leq 20.000; \quad 0.000 \leq y \leq 5.000; \quad 2.500 \leq x + y \leq 20.000,$$

$$0.030 \leq t \leq 0.150; \quad and \quad z \geq 0.84 \times [(30-x)(30-$$

$$y)(1+15t)/\{125(20+y)\}+(5+3y)/200].$$

Further, in the semiconductor ceramic according to the present invention, characteristically, the semiconductivity-imparting agent Smc is Gd, a compound represented by the general formula $(Ba_{1-(x+y+z)/100}Ca_{x/100}Sr_{y/100}Gd_{z/100})TiO_3$ is contained as its main constituent, Mn is contained in a proportion of t parts by mol with respect to 100 parts by mol of the main constituent, and the x, y, t and z satisfy relationships of: $2.500 \leq x \leq 20.000$; $0.000 \leq y \leq 5.000$; $2.500 \leq x + y \leq 20.000$, $0.030 \leq t \leq 0.150$; and $z \geq 0.63x[(30-x)(30-y)(1+15t)/\{125(20+y)\}+(5+3y)/200]$.

Further, in the semiconductor ceramic according to the present invention, characteristically, the semiconductivity-imparting agent Smc is Bi, a compound represented by the general formula $(Ba_{1-(x+y+z)/100}Ca_{x/100}Sr_{y/100}Bi_{z/100})TiO_3$ is contained as its main constituent, Mn is contained in a proportion of t parts by mol with respect to 100 parts by mol of the main constituent, and the x, y, t and z satisfy relationships of: $2.500 \leq x \leq 20.000$; $0.000 \leq y \leq 5.000$; $2.500 \leq x + y \leq 20.000$, $0.030 \leq t \leq 0.150$; and $z \geq 0.68 \times [(30-x)(30-y)(1+15t)/\{125(20+y)\}+(5+3y)/200]$.

Further, in the semiconductor ceramic according to the present invention, characteristically, the semiconductivity-imparting agent Smc is Nd, a compound represented by the general formula $(Ba_{1-(x+y+z)/100}Ca_{x/100}Sr_{y/100}Nd_{z/100})TiO_3$ is contained as its main constituent, Mn is contained in a proportion of t parts by mol with respect to 100 parts by mol of the main constituent, and the x, y, t and z satisfy relationships of: $2.500 \leq x \leq 20.000$; $0.000 \leq y \leq 5.000$; $2.500 \leq x + y \leq 20.000$, $0.030 \leq t \leq 0.150$; and $z \geq 0.42 \times [(30-x)(30-y)(1+15t)/\{125(20+y)\}+(5+3y)/200]$.

Furthermore, the present invention is also directed to a positive temperature coefficient thermistor that has a pair of external electrodes formed on the surface of a component body, with the component body formed from the semiconductor ceramic.

Advantageous effect of the invention

According to this invention, it is possible to provide a semiconductor ceramic containing substantially no substance of concern, which is excellent in voltage resistance, and a positive temperature coefficient thermistor element using the semiconductor ceramic.

BRIEF EXPLANATION OF DRAWINGS

FIG 1 is a perspective view illustrating a positive temperature coefficient thermistor element according to the present invention.
FIG 2 is a curve showing the relationship between the Er amount and resistivity in Table 1.
FIG 3 is a SEM photograph of a semiconductor ceramic of sample number 1.
FIG 4 is a SEM photograph of a semiconductor ceramic of sample number 3.
FIG 5 is a SEM photograph of a semiconductor ceramic of sample number 5.

BEST MODE FOR CARRYING OUT THE INVENTION

An embodiment for carrying out the present invention will be described below.

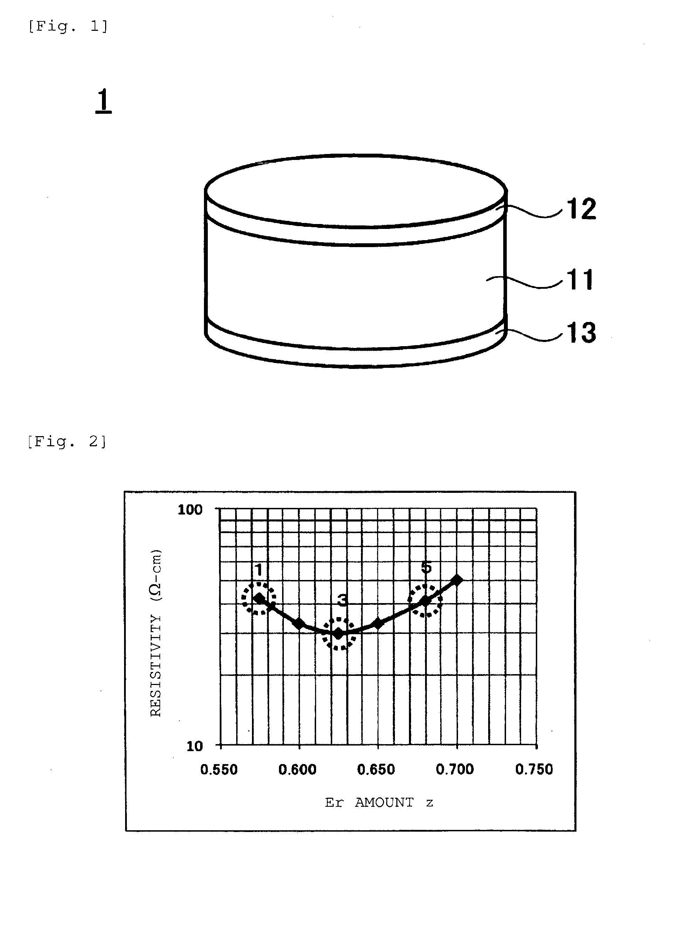

FIG 1 is a perspective view illustrating a positive temperature coefficient thermistor element according to the present invention. The positive temperature coefficient thermistor element 1 includes a component body 11 and electrodes 12, 13. The component body 11 is composed of a semiconductor ceramic.
The component body 11 is formed in the shape of a plate including principal surfaces. The component body 11 is formed in the shape of a disk in the present embodiment, but may be formed in the shape of a cuboid.
The electrodes 12, 13 are formed on both the principal surfaces of the component body 11. The structures of the electrodes 12, 13 include, for example, a two-layer structure of Ni and Ag.

The inventors have focused attention on barium titanate-based ceramics containing substantially no lead to carry out earnest studies on the ceramics. The addition of a semiconductivity-imparting agent Smc (hereinafter, the semiconductivity-imparting agent is referred to as "Smc", as the case may be) to the barium titanate-based ceramics can reduce the resistivity, and make the ceramics semiconductive. In that regard, the increased amount of the semiconductivity-imparting agent Smc shows a tendency to decrease the resistivity up to a predetermined amount of semiconductivity-imparting agent Smc, but increase the resistivity in excess of the predetermined amount. Further, the inventors have found that the semiconductor ceramic has a correlation between the crystal grain size and voltage resistance thereof, and when the semiconductivity-imparting agent Smc is contained in excess of the amount of semiconductivity-imparting agent Smc which minimizes the resistivity, the semiconductor ceramic is reduced in crystal grain size to improve the voltage resistance.

For example, Er, Dy, Y, Gd, Bi, Nd, and the like are used as the semiconductivity-imparting agent Smc.

For example, with the use of Er as the semiconductivity-imparting agent Smc, the addition of Er to the titanate-based ceramic can reduce the resistivity, and make the ceramic semiconductive. In that regard, the increased amount of Er shows a tendency to decrease the resistivity up to a predetermined amount of Er, but increase the resistivity in excess of the predetermined amount. Further, the inventors have found that the semiconductor ceramic has a correlation between the crystal grain size and voltage resistance thereof, and when Er is contained in excess of the amount of Er which minimizes the resistivity, the semiconductor ceramic is reduced in crystal grain size to improve the voltage resistance.

The semiconductor ceramic according to the present invention contains, as its main constituent, a compound represented by the general formula: $(Ba_{1-(x+y+z)/100}Ca_{x/100}Sr_{y/100}Smc_{z/100})\ TiO_3$ (where Smc represents a semiconductivity-imparting agent), and contains Mn in a proportion of t parts by mol with respect to 100 parts by mol of the main constituent, and x, y, and t satisfy the relationships of $2.500 \leq x \leq 20.000$, $0.000 \leq y \leq 5.000$, $2.500 \leq x + y \leq 20.000$, and $0.030 \leq t \leq 0.150$.

The present invention is characterized in that z is equal to or more than the amount of semiconductivity-imparting agent Smc at which the resistivity is minimum on a curve showing the relationship between the amount of semiconductivity-imparting agent Smc and resistivity, which is defined by x, y, and t. In this case, the semiconductor ceramic is reduced in crystal grain size to improve the voltage resistance.

The inventors have first conducted an experiment with the use of Er as the semiconductivity-imparting agent Smc, and figured out that the relationship between the Er amount $z_{min}$ at which the resistivity is minimum, and x, y and t is expressed by the following formula (1) in the above-mentioned ranges of x, y, and t.

$$\texttt{Formula (1): } z_{min} = (30-x)(30-y)(1+15t)/\{125(20+y)\}+(5+3y)/200$$

Therefore, the Er amount which is equal to $z_{min}$ or more reduces the semiconductor ceramic in crystal grain size to improve the voltage resistance.

It is to be noted that the derivation scheme of the formula (1) will be described in detail in the description of Experimental Example 1 and Experimental Example 2 described later.

Further, while the upper limit of z is not to be considered particularly defined, the ceramic is preferably likely to be made semiconductive at z = 1.500 or less.

Next, the inventors have studied cases of using semiconductivity-imparting agents Smc other than Er.

The semiconductor ceramic according to the present invention has a simple perovskite-type structure, and the simple perovskite-type structure is represented by the general formula $ABO_3$. It is known that typically, Ba, Ca, and Sr are incorporated in the A site whereas Ti is incorporated in the B site in the semiconductor ceramic according to the present invention.

In addition, it is known that the function of the semiconductivity-imparting agent Smc is dependent on the ionic radius of the semiconductivity-imparting agent Smc. More specifically, the semiconductivity-imparting agent Smc functions as a semiconductivity-imparting agent when the agent is incorporated into the A site of the general formula $(BaCaSr)TiO_3$, or functions to interfere with imparting semiconductivity when the agent is incorporated into the B site. Further, the ease of incorporation into the B site is dependent on the ionic radius of the semiconductivity-imparting agent Smc, and the semiconductivity-imparting agent Smc is more likely to be incorporated as the ionic radius is closer to 0.68 angstroms which is the ionic radius of $Ti^{4+}$ constituting the B site. It is to be noted that the respective elements constituting the A site have an ionic radius of 1.34 angstroms for $Ba^{2+}$, an ionic radius of 0.99 angstroms for $Ca^{2+}$, and an ionic radius of 1.12 angstroms for $Sr^{2+}$. (The ionic radii each refer to estimates from Ahrens (1952).)

Table 1 shows therein the ionic radii and donor coefficients of $Er^{3+}$, $Dy^{3+}$, $Y^{3+}$, $Gd^{3+}$, $Bi^{3+}$, and $Nd^{3+}$ for the semiconductivity-imparting agent Smc. The donor coefficient herein refers to the ratio between the Er amount required for imparting semiconductivity when Er is used as the semiconductivity-imparting agent Smc and the amount of other semiconductivity-imparting agent Smc (such as Dy, Y, Gd, Bi, and Nd) required for imparting semiconductivity when the semiconductivity-imparting agent Smc is used.

[Table 1]

| Semiconductivity-Imparting Agent Smc | Ionic Radius (angstrom) | Donor Coefficient |
|---|---|---|
| Er | 0.89 | 1.00 |
| Dy | 0.92 | 0.84 |
| Y | 0.92 | 0.84 |
| Gd | 0.97 | 0.63 |
| Bi | 0.96 | 0.68 |
| Nd | 1.04 | 0.42 |

As shown in Table 1, for example, the ionic radius of Dy is 0.92 angstroms which has a larger difference from the ionic radius 0.68 angstroms of $Ti^{4+}$ constituting the B site than from the ionic radius 0.89 angstroms of Er, and thus less likely to be incorporated into the B site, but more likely to be incorporated into the A site. The donor coefficient of Dy is 0.84, which means that, in the case of using Dy for the semiconductivity-imparting agent Smc, the amount of Dy may be 0.84 times as large as compared with the case of using Er for the semiconductivity-imparting agent Smc.

From the foregoing, the formula (1) is transformed depending on the type of the semiconductivity-imparting agent Smc, and based on the donor coefficient in Table 1, into the following formula (2) when the semiconductivity-imparting agent Smc is Dy or Y, for example.

$$\text{Formula (2): } z_{min} = 0.84 \times [(30-x)(30-y)(1+15t)/\{125(20+y)\}+(5+3y)/200]$$

Alternatively, the following formula (3) is obtained when the semiconductivity-imparting agent Smc is Gd.

$$\text{Formula (3): } z_{min} = 0.63 \times [(30-x)(30-y)(1+15t)/\{125(20+y)\}+(5+3y)/200]$$

Alternatively, the following formula (4) is obtained when the semiconductivity-imparting agent Smc is Bi.

$$\text{Formula (4): } z_{min} = 0.68 \times [(30-x)(30-y)(1+15t)/\{125(20+y)\}+(5+3y)/200]$$

Alternatively, the following formula (5) is obtained when the semiconductivity-imparting agent Smc is Nd.

$$\text{Formula (5): } z_{min} = 0.42 \times [(30-x)(30-y)(1+15t)/\{125(20+y)\}+(5+3y)/200]$$

Next, a method for manufacturing a positive temperature coefficient thermistor element will be described.

Initially, a raw material powder for the semiconductor ceramic is prepared. First, compound powders such as oxides and carbonates including constituent elements for the main constituent are mixed in predetermined proportions, and subjected to calcination to obtain a raw material powder for the semiconductor ceramic. While this method is typically referred to as a solid-phase synthesis method, wet synthesis methods such as a hydrothermal synthesis method and an oxalic acid method may be used as other methods.

Next, the raw material powder for the semiconductor ceramic is, with the addition of a vinyl acetate-based organic binder and pure water thereto, mixed in a wet way along with media, and the obtained slurry is dried to obtain a powder for molding. Then, a compact is prepared by a pressure molding method. It is to be noted that the compact may be created by other molding methods such as a sheet molding method.

Next, this compact is subjected to firing for a predetermined period of time at a temperature for making the semiconductor ceramic semiconductive, for example, 1250 to 1450°C in the atmosphere to obtain the semiconductor ceramic.

Next, an electrode is formed on both principal surface of the semiconductor ceramic. The electrodes are formed by plating, sputtering, baking, or the like. In the way described above, a positive temperature coefficient thermistor element is prepared.

It is to be noted that the present invention is not to be considered limited to the embodiment described above. For example, alkali metals, transition metals, Cl, S, P, Hf, etc. may be contained in the semiconductor ceramic described above, to such an extent that the effect of the present invention is not hindered.

In addition, in this specification, the phrase "containing substantially no lead" means that no lead is contained in the main constituent. Therefore, such lead as inevitably mixed to such an extent that the characteristics are not affected is not to be considered also excluded.

Next, experimental examples will be described which were carried out according to this invention.

[Experimental Example 1]

In Experimental Example 1, the relationship between the Er amount and the resistivity under predetermined conditions of x, y, and t was investigated in the case of using Er as the semiconductivity-imparting agent Smc.

(A) Preparation of Raw Material Powder for Semiconductor Ceramic

Initially, respective powders of $BaCO_3$, $CaCO_3$, $SrCO_3$, $Er_2O_3$, $MnCO_3$, and $SiO_2$ were prepared as starting raw materials. Then, the respective starting raw materials were weighed, and blended. Then, the materials were, with the addition of pure water and a polymer-type dispersant thereto, subjected to wet grinding for predetermined period of time along with PSZ balls in a ball mill. Thereafter, the materials were dehydrated, dried, and subjected to a heat treatment for 2 hours in a temperature range of 1200°C to obtain a raw material powder for the semiconductor ceramic represented by the formula (6). The blending proportions for each sample number are shown in Table 2 described later. Formula (6): $100(Ba_{1-(x+y+z)/100}Ca_{x/100}Sr_{y/100}Er_{z/100})TiO_3 + tMn$

(B) Preparation of Positive Temperature Coefficient Thermistor Element

The raw material powder described above was, with the addition of a binder and pure water thereto, subjected to wet grinding for a predetermined period of time along with PSZ balls in a ball mill, and then granulated to obtain a powder for molding.

Next, this powder for molding was pressed by a uniaxial pressing machine at a pressure on the order of 2000 $kgf/cm^2$ to form a compact of $\phi$ 19.2 mm $\times$ t3.0 mm in size. Thereafter, the compact was subjected to firing at 1350°C for 2 hours to obtain a fired body. The dimensions of the fired body obtained were approximately 16 mm in diameter and approximately 2.5 mm in thickness.

Next, the fired body was subjected to Ni plating. Thereafter, a plating film formed on a side surface of the fired body were removed by polishing. Thereafter, Ag films were subjected to baking on the plating films formed on end surfaces of the fired body. In this way, obtained was a positive temperature coefficient thermistor element including the electrodes of two-layer structures of Ni and Ag.

(C) Characterization

First, a resistivity measurement at 25°C was conducted by using a four-terminal method.

Next, in order to evaluate the voltage resistance of the semiconductor ceramic, a resistance test was conducted as follows. First, a voltage of 100 V was applied to each sample for 1 minute to measure the current value in that case. Then, when the element was not broken at the voltage of 100 V, the voltage was increased to repeat the same measurement. Then, the voltage value at which the measured current value was minimized, or the voltage value immediately before the element was broken, was regarded as the voltage resistance value.

The resistivity is correlated with the voltage resistance value, and the voltage resistance value is decreased as the resistivity is decreased, whereas the voltage resistance value is increased as the resistivity is increased. Therefore, the voltage resistance value required varies depending on the resistivity value of the sample. In this case, upon request of commercial products, when the lower limit of voltage resistance and the resistivity were denoted by $WSV_{min}$ and $\rho_{25}$ respectively, a sample with the voltage resistance value not lower than $WSV_{min} = 400 \times \log_{10}(\rho_{25}) - 200$ was regarded as a non-defective product.

Table 2 shows the resistivity and the result of the voltage resistance test in the case of varying the Er amount under the conditions of x = 10.000, y = 0.000, and t = 0.100. The "Lower Limit of Voltage Resistance" in the table is a calculated value for the lower limit $WSV_{min}$ of the voltage resistance at the resistivity for each sample. In addition, the sample numbers marked with * refer to samples outside the scope of this invention. Further, FIG 2 shows a curve showing the relationship between the Er amount and resistivity in Table 2.

[Table 2]

| Sample Number | $100\,(Ba_{1-(x+y+z)/100}Ca_{x/100}Sr_{y/100}Er_{z/100})TiO_3+tMn$ | | | | | | Resistivity [$\rho\cdot$cm] | Voltage Resistance [V] | Lower Limit of Voltage Resistance (Reference) |
| --- | --- | --- | --- | --- | --- | --- | --- | --- | --- |
| | Ba 100-(x+y+z) | Ca x | Sr y | Ca+Sr x+y | Er z | Mn t | | | |
| 1* | 89.425 | 10.000 | 0.000 | 10.000 | 0.575 | 0.100 | 42 | 315 | 449 |
| 2* | 89.400 | 10.000 | 0.000 | 10.000 | 0.600 | 0.100 | 33 | 355 | 407 |
| 3 | 89.375 | 10.000 | 0.000 | 10.000 | 0.625 | 0.100 | 30 | 450 | 391 |
| 4 | 89.350 | 10.000 | 0.000 | 10.000 | 0.650 | 0.100 | 33 | 500 | 407 |
| 5 | 89.325 | 10.000 | 0.000 | 10.000 | 0.675 | 0.100 | 41 | 560 | 445 |
| 6 | 89.300 | 10.000 | 0.000 | 10.000 | 0.700 | 0.100 | 50 | 630 | 480 |

As is clear from Table 2 and FIG 2, it is determined that the resistivity shows a minimum value at z = 0.625 under the conditions of x = 10.000, y = 0.000, and t = 0.100. In addition, it is determined that sample numbers 3 to 6 with z = 0.625 or more exhibit favorable voltage resistance with the voltage resistance in excess of the lower limit of voltage resistance.

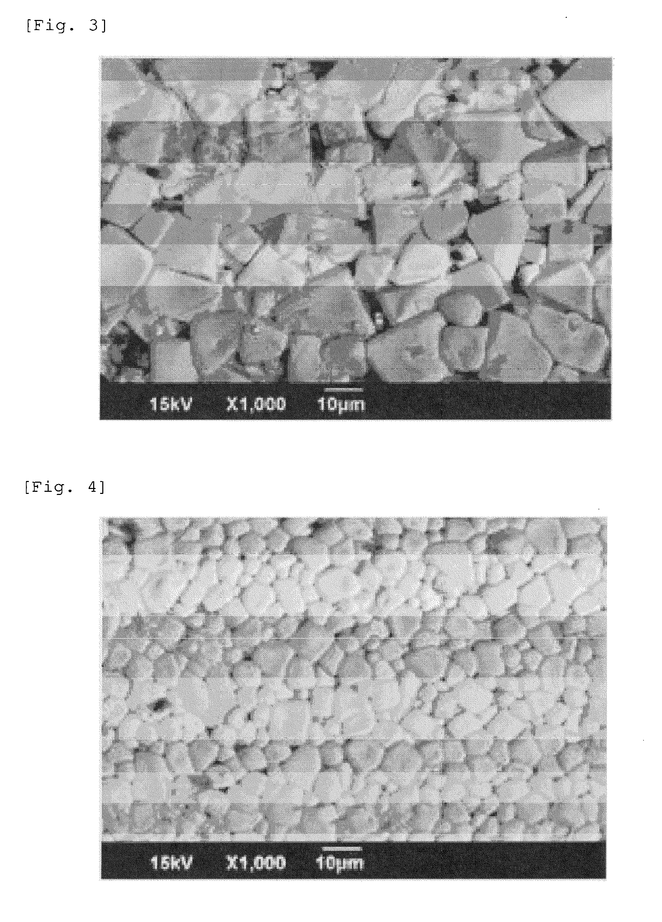

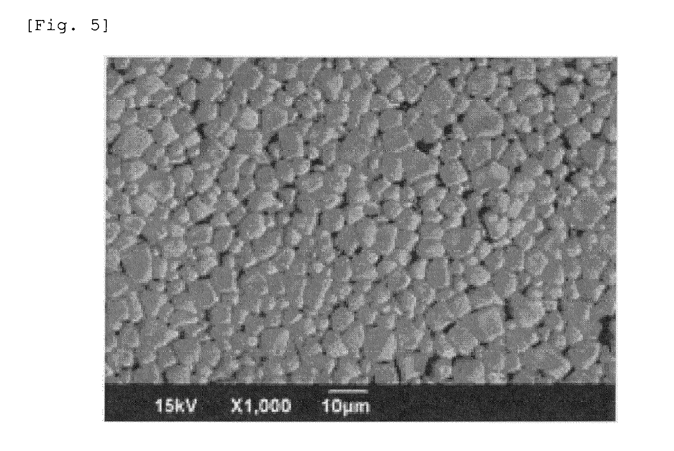

FIGS 3 to 5 are SEM photographs of the semiconductor ceramics of sample numbers 1, 3, and 5 in Table 2. From FIGS 3 to 5, sample number 1 with z = 0.575 is large in crystal grain size, and also has voids produced at grain boundaries. On the other hand, sample number 3 with z = 0.625 and sample number 5 with z = 0.675 are small in crystal grain size. In addition, the voltage resistance in Table 2 is improved with the increase in Er amount, and it is thus determined that the voltage resistance value is improved as the crystal grain size is decreased.

[Experimental Example 2]

In Experimental Example 2, in the case of varying each value of x, y, and t with the use of Er as the semiconductivity-imparting agent Smc, the minimum Er amount $z_{min}$ for minimum resistivity under the respective conditions of x, y, and t was figured out from an experiment. In the experiment, the Er amount was varied by 0.025 to figure out the $z_{min}$. Table 3 shows the values of $z_{min}$ under the respective conditions of x, y, and t. It is to be noted that the method for preparing the positive temperature coefficient thermistor elements is the same as in Experimental Example 1.

[Table 3]

| | Sample Number | 100 $(Ba_{1-(x+y+z)/100}Ca_{x/100}Sr_{y/100}Er_{z/100})$ $TiO_3$+tMn | | | | | |
|---|---|---|---|---|---|---|---|
| | | Ba 100-(x+y+z) | Ca $x$ | Sr $y$ | Mn $t$ | Minimum Er Amount $Z_{min}$ | Er Calculated Value $f_3(x, y, t)$ |
| (A) | 11 | 96.650 | 2.500 | 0.000 | 0.100 | 0.850 | 0.850 |
| | 12 | 94.225 | 5.000 | 0.000 | 0.100 | 0.775 | 0.775 |
| | 13 | 91.800 | 7.500 | 0.000 | 0.100 | 0.700 | 0.700 |
| | 14 | 89.375 | 10.000 | 0.000 | 0.100 | 0.625 | 0.625 |
| | 15 | 86.950 | 12.500 | 0.000 | 0.100 | 0.550 | 0.550 |
| | 16 | 84.525 | 15.000 | 0.000 | 0.100 | 0.475 | 0.475 |
| | 17 | 82.100 | 17.500 | 0.000 | 0.100 | 0.400 | 0.400 |
| | 18 | 79.675 | 20.000 | 0.000 | 0.100 | 0.325 | 0.325 |
| (B) | 19 | 86.950 | 7.500 | 5.000 | 0.100 | 0.550 | 0.550 |
| | 20 | 84.500 | 10.000 | 5.000 | 0.100 | 0.500 | 0.500 |
| | 21 | 82.050 | 12.500 | 5.000 | 0.100 | 0.450 | 0.450 |
| | 22 | 79.600 | 15.000 | 5.000 | 0.100 | 0.400 | 0.400 |
| (C) | 23 | 84.625 | 15.000 | 0.000 | 0.060 | 0.375 | 0.367 |
| | 24 | 84.575 | 15.000 | 0.000 | 0.080 | 0.425 | 0.421 |
| | 25 | 84.525 | 15.000 | 0.000 | 0.100 | 0.475 | 0.475 |
| | 26 | 84.476 | 15.000 | 0.000 | 0.120 | 0.525 | 0.529 |
| | 27 | 84.425 | 15.000 | 0.000 | 0.140 | 0.575 | 0.583 |
| (D) | 28 | 89.550 | 10.000 | 0.000 | 0.050 | 0.450 | 0.445 |
| | 29 | 89.375 | 10.000 | 0.000 | 0.100 | 0.625 | 0.625 |
| | 30 | 89.300 | 10.000 | 0.000 | 0.120 | 0.700 | 0.697 |
| | 31 | 89.200 | 10.000 | 0.000 | 0.150 | 0.800 | 0.805 |

From Table 3, the $z_{min}$ has a tendency to decrease when the Ca amount x or the Sr amount y is increased. In addition, it is determined that the $z_{min}$ has a tendency to increase when the Mn amount t is increased.

Next, formulas for explaining this $z_{min}$ were derived in the order of (A) to (D).

Sample numbers 11 to 18 in (A) show results of $z_{min}$ in the case of varying the Ca amount x under the conditions of y = 0.000 and t = 0.100. In this case, the formula: $f_1(x) = 30(30-x)/1000 + 5/200$ was assumed in order to explain the relationship between the Ca amount x and $z_{min}$.

Sample numbers 19 to 22 in (B) show results of $z_{min}$ in the case of varying the Ca amount x under the conditions of y = 5.000 and t = 0.100. In this case, in order to meet both of the conditions (A) and (B), the $f_1(x)$ was transformed to assume the formula: $f_2(x,y) = (30-x)(30-y)/(1000+50y) + (5+3y)/200$.

Sample numbers 23 to 27 in (C) show results of $z_{min}$ in the case of varying the Mn amount t under the conditions of x = 15.000 and y = 0.000. In addition, sample numbers 28 to 31 in (D) show results of $z_{min}$ in the case of varying the Mn amount t under the conditions of x = 10.000 and y = 0.000. In order to meet both of the conditions (C) and (D), the $f_2(x,y)$ was transformed to assume the formula: $f_3(x,y,t) = (30-x)(30-y)(1+15t)/\{125(20+y)\} + (5+3y)/200$.

The Er calculated value in Table 3 is a calculated value from the $f_3(x,y,t)$ with the use of the formula (1).

$$\text{Formula (1): } z_{min} = (30-x)(30-y)(1+15t)/\{125(20+y)\}+(5+3y)/200$$

As can be seen from Table 3, when the $z_{min}$ is compared with the Er calculated value, the calculated value from the $f_3(x,y,t)$ can be considered to well reproduce the $z_{min}$.

[Experimental Example 3]

In Experimental Example 3, the resistivity, voltage resistance, and double resistance point were figured out in the case of varying each value of x, y, z and t with the use of Er as the semiconductivity-imparting agent Smc. The double resistance point refers to a temperature at which the resistance value at 25°C is doubled.

Table 4 shows the results. The calculated values from the $f_3(x,y,t)$ with the use of the formula (1) are listed as the Er calculated value. In addition, the lower limit of voltage resistance at the resistivity is shown for each sample as in Experimental Example 1. Samples with the resistivity of 1000 Ω·cm or less without any practical problems were regarded as non-defective products. In addition, samples with the double resistance point of 115 to 140°C were regarded as non-defective products.

[Table 4]

| Sample Number | 100 (Ba$_{1-(x+y+z)/100}$Ca$_{x/100}$Sr$_{y/100}$Er$_{z/100}$) TiO$_3$+tMn | | | | | | | Resistivity [ρ·cm] | Voltage Resistance [V] | Lower Limit of Voltage Resistance (Reference) | Double Resistance Point [°C] |
|---|---|---|---|---|---|---|---|---|---|---|---|
| | Ba 100-(x+y+z) | Ca | Sr $y$ | Ca+Sr $x+y$ | Er $z$ | Er Calculated Value (Reference) | Mn $t$ | | | | |
| 41* | 99.075 | 0.000 | 0.000 | 0.000 | 0.925 | 0.925 | 0.100 | 20 | 200 | 320 | 133 |
| 42* | 96.700 | 2.500 | 0.000 | 2.500 | 0.800 | 0.850 | 0.100 | 35 | 280 | 418 | 134 |
| 43 | 96.650 | 2.500 | 0.000 | 2.500 | 0.850 | 0.850 | 0.100 | 28 | 450 | 379 | 134 |
| 44 | 96.600 | 2.500 | 0.000 | 2.500 | 0.900 | 0.850 | 0.100 | 36 | 560 | 423 | 133 |
| 45 | 89.375 | 10.000 | 0.000 | 10.000 | 0.625 | 0.625 | 0.100 | 30 | 450 | 391 | 134 |
| 46 | 79.675 | 20.000 | 0.000 | 20.000 | 0.325 | 0.325 | 0.100 | 123 | 800 | 636 | 118 |
| 47* | 77.250 | 22.500 | 0.000 | 22.500 | 0.250 | 0.250 | 0.100 | 184 | 1000 | 706 | 112 |
| 48* | 96.704 | 0.000 | 2.500 | 2.500 | 0.796 | 0.796 | 0.100 | 28 | 280 | 376 | 125 |
| 49 | 94.265 | 2.500 | 2.500 | 5.000 | 0.735 | 0.735 | 0.100 | 32 | 500 | 399 | 125 |
| 50 | 86.949 | 10.000 | 2.500 | 12.500 | 0.551 | 0.551 | 0.100 | 31 | 450 | 394 | 125 |
| 51 | 79.632 | 17.5,00 | 2.500 | 20.000 | 0.368 | 0.368 | 0.100 | 73 | 710 | 544 | 118 |
| 52* | 77.193 | 20.000 | 2.500 | 22.500 | 0.307 | 0.307 | 0.100 | 115 | 800 | 624 | 111 |
| 53* | 94.300 | 0.000 | 5.000 | 5.000 | 0.700 | 0.700 | 0.100 | 35 | 355 | 418 | 117 |
| 54 | 91.850 | 2.500 | 5.000 | 7.500 | 0.650 | 0.650 | 0.100 | 35 | 500 | 418 | 118 |
| 55 | 84.500 | 10.000 | 5.000 | 15.000 | 0.500 | 0.500 | 0.100 | 31 | 450 | 397 | 116 |
| 56* | 79.650 | 15.000 | 5.000 | 20.000 | 0.350 | 0.400 | 0.100 | 32 | 315 | 402 | 116 |
| 57 | 79.600 | 15.000 | 5.000 | 20.000 | 0.400 | 0.400 | 0.100 | 22 | 400 | 337 | 117 |
| 58 | 79.550 | 15.000 | 5.000 | 20.000 | 0.450 | 0.400 | 0.100 | 36 | 500 | 423 | 116 |
| 59* | 77.150 | 17.500 | 5.000 | 22.500 | 0.350 | 0.350 | 0.100 | 45 | 560 | 461 | 109 |
| 60* | 82.035 | 10.000 | 7.500 | 17.500 | 0.465 | 0.465 | 0.100 | 23 | 400 | 345 | 105 |
| 61* | 87.183 | 10.000 | 2.500 | 12.500 | 0.317 | 0.317 | 0.020 | 17 | 160 | 292 | 130 |
| 62 | 87.154 | 10.000 | 2.500 | 12.500 | 0.346 | 0.346 | 0.030 | 17 | 315 | 292 | 125 |
| 63 | 86.802 | 10.000 | 2.500 | 12.500 | 0.698 | 0.698 | 0.150 | 653 | 1250 | 926 | 124 |
| 64* | 86.743 | 10.000 | 2.500 | 12.500 | 0.757 | 0.757 | 0.170 | 2032 | - | 1123 | 122 |

EP 2 695 869 B1

**EP 2 695 869 B1**

Sample numbers 41, 48, and 53 with the small Ca amount x of 0.000 have resulted in voltage resistance values smaller than the lower limits of voltage resistance.

Sample number 47 with the large Ca amount x of 22.500 has resulted in a low double resistance point. In addition, sample numbers 52 and 59 with the large total amount x+y of Ca and Sr of 22.500 have resulted in low double resistance points. In addition, sample number 60 with the large Sr amount y of 7.500 has resulted in a low double resistance point.

Sample numbers 42 to 44 have the Er amount z varied under the conditions of x = 2.500, y = 0.000, and t = 0.100. Sample number 42 with the small Er amount z has a voltage resistance value of 280, which is smaller as compared with the lower limit of voltage resistance: 418. On the other hand, sample numbers 43 and 44 with the Er amount z not lower than the Er calculated value have resulted in voltage resistance values larger than the lower limits of voltage resistance.

Sample numbers 56 to 58 have the Er amount z varied under the conditions of x = 15.000, y = 5.000, and t = 0.100. Sample number 56 with the small Er amount z has a voltage resistance value of 315, which is smaller than the lower limit of voltage resistance. On the other hand, sample numbers 57 and 58 with the Er amount z not lower than the Er calculated value have resulted in voltage resistance values larger than the lower limits of voltage resistance.

Sample number 61 with the small Mn amount t of 0.020 has resulted in a voltage resistance value smaller than the lower limit of voltage resistance. In addition, sample number 64 with the large Mn amount t of 0.170 has resulted in a large value of 2032 for the resistivity.

In addition, sample numbers 45, 46, 49 to 51, 54, 55, 62, and 63 exhibited favorable voltage resistance values and favorable values for the double resistance point.

[Experimental Example 4]

In Experimental Example 4, the resistivity, voltage resistance, and double resistance point were figured out in the case of varying each value of x, y, z and t with the use of Dy as the semiconductivity-imparting agent Smc. The double resistance point refers to a temperature at which the resistance value at 25°C is doubled.

It is to be noted that the same method for preparing samples, etc. were adopted as in Experimental Examples 1 to 3 (the same applies to the following experiment examples).

Table 5 shows the results. The calculated values from the $f_3(x,y,t)$ with the use of the formula (2) are listed as the Dy calculated value.

$$\text{Formula (2):} \ z_{min} = 0.84 \times [(30-x)(30-y)(1+15t)/\{125(20+y)\}+(5+3y)/200]$$

In addition, the lower limit of voltage resistance at the resistivity is shown for each sample. Samples with the resistivity of 1000 Ω·cm or less without any practical problems were regarded as non-defective products. In addition, samples with the double resistance point of 115 to 140°C were regarded as non-defective products.

12

[Table 5]

| Sample Number | 100 (Ba$_{1-(x+y+z)/100}$Ca$_{x/100}$Sr$_{y/100}$Dy$_{z/100}$) TiO$_3$+tMn | | | | | | | Resistivity [$\rho \cdot$cm] | Voltage Resistance [V] | Lower Limit of Voltage Resistance (Reference) | Double Resistance Point [°C] |
|---|---|---|---|---|---|---|---|---|---|---|---|
| | Ba 100-(x+y+z) | Ca$_x$ | Sr$_y$ | Ca+Sr x+y | Dy$_z$ | Dy Calculated Value (Reference) | Mn$_t$ | | | | |
| 71* | 99.221 | 0.000 | 0.000 | 0.000 | 0.779 | 0.779 | 0.100 | 19 | 200 | 308 | 134 |
| 72* | 96.834 | 2.500 | 0.000 | 2.500 | 0.666 | 0.716 | 0.100 | 33 | 280 | 406 | 135 |
| 73 | 96.784 | 2.500 | 0.000 | 2.500 | 0.716 | 0.716 | 0.100 | 26 | 400 | 367 | 134 |
| 74 | 96.734 | 2.500 | 0.000 | 2.500 | 0.766 | 0.716 | 0.100 | 34 | 500 | 411 | 134 |
| 75 | 79.726 | 20.000 | 0.000 | 20.000 | 0.274 | 0.274 | 0.100 | 115 | 710 | 624 | 119 |
| 76* | 77.289 | 22.500 | 0.000 | 22.500 | 0.211 | 0.211 | 0.100 | 172 | 900 | 694 | 114 |
| 77* | 94.411 | 0.000 | 5.000 | 5.000 | 0.589 | 0.589 | 0.100 | 33 | 315 | 406 | 118 |
| 78 | 91.953 | 2.500 | 5.000 | 7.500 | 0.547 | 0.547 | 0.100 | 33 | 450 | 406 | 119 |
| 79* | 79.713 | 15.000 | 5.000 | 20.000 | 0.287 | 0.337 | 0.100 | 30 | 280 | 390 | 118 |
| 80 | 79.663 | 15.000 | 5.000 | 20.000 | 0.337 | 0.337 | 0.100 | 21 | 400 | 325 | 117 |
| 81 | 79.613 | 15.000 | 5.000 | 20.000 | 0.387 | 0.337 | 0.100 | 34 | 450 | 411 | 116 |
| 82* | 77.205 | 17.500 | 5.000 | 22.500 | 0.295 | 0.295 | 0.100 | 42 | 500 | 449 | 110 |
| 83* | 82.035 | 10.000 | 7.500 | 17.500 | 0.391 | 0.391 | 0.100 | 20 | 355 | 320 | 106 |
| 84* | 87.233 | 10.000 | 2.500 | 12.500 | 0.267 | 0.267 | 0.020 | 16 | 180 | 280 | 130 |
| 85 | 87.209 | 10.000 | 2.500 | 12.500 | 0.291 | 0.291 | 0.030 | 16 | 355 | 280 | 125 |
| 86 | 86.912 | 10.000 | 2.500 | 12.500 | 0.588 | 0.588 | 0.150 | 607 | 1250 | 913 | 124 |
| 87* | 86.863 | 10.000 | 2.500 | 12.500 | 0.637 | 0.637 | 0.170 | 1890 | - | 1111 | 122 |

Sample numbers 71 and 77 with the small Ca amount x of 0.000 have resulted in voltage resistance values smaller than the lower limits of voltage resistance.

Sample number 76 with the large Ca amount x of 22.500 has resulted in a low double resistance point. In addition, sample numbers 76 and 82 with the large total amount x+y of Ca and Sr of 22.500 have resulted in low double resistance points. In addition, sample number 83 with the large Sr amount y of 7.500 has resulted in a low double resistance point.

Sample numbers 72 to 74 have the Dy amount z varied under the conditions of x = 2.500, y = 0.000, and t = 0.100. Sample number 72 with the small Dy amount z has a voltage resistance value of 280, which is smaller as compared with the lower limit of voltage resistance: 406. On the other hand, sample numbers 73 and 74 with the Dy amount z not lower than the Dy calculated value have resulted in voltage resistance values larger than the lower limits of voltage resistance.

Sample numbers 79 to 81 have the Dy amount z varied under the conditions of x = 15.000, y = 5.000, and t = 0.100. Sample number 79 with the small Dy amount z has a voltage resistance value of 280, which is smaller than the lower limit of voltage resistance. On the other hand, sample numbers 80 and 81 with the Dy amount z not lower than the Dy calculated value have resulted in voltage resistance values larger than the lower limits of voltage resistance.

Sample number 84 with the small Mn amount t of 0.020 has resulted in a voltage resistance value smaller than the lower limit of voltage resistance. In addition, sample number 87 with the large Mn amount t of 0.170 has resulted in a large value of 1890 for the resistivity.

In addition, sample numbers 75, 78, 85, and 86 exhibited favorable voltage resistance values and favorable values for the double resistance point.

[Experimental Example 5]

In Experimental Example 5, the resistivity, voltage resistance, and double resistance point were figured out in the case of varying each value of x, y, z and t with the use of Y as the semiconductivity-imparting agent Smc. The double resistance point refers to a temperature at which the resistance value at 25°C is doubled.

Table 6 shows the results. The calculated values from the $f_3(x,y,t)$ with the use of the formula (2) are listed as the Y calculated value.

$$\text{Formula (2): } z_{min} = 0.84 \times [(30-x)(30-y)(1+15t)/\{125(20+y)\}+(5+3y)/200]$$

In addition, the lower limit of voltage resistance at the resistivity is shown for each sample. Samples with the resistivity of 1000 $\Omega \cdot$cm or less without any practical problems were regarded as non-defective products. In addition, samples with the double resistance point of 115 to 140°C were regarded as non-defective products.

[Table 6]

| Sample Number | $100 (Ba_{1-(x+y+z)/100}Ca_{x/100}Sr_{y/100}Y_{z/100})$ $TiO_3$+tMn | | | | | | | Resistivity [ρ·cm] | Voltage Resistance [V] | Lower Limit of Voltage Resistance (Reference) | Double Resistance Point [°C] |
|---|---|---|---|---|---|---|---|---|---|---|---|
| | Ba 100-(x+y+z) | $Ca_x$ | $Sr_y$ | Ca+Sr x+y | $Y_z$ | calculated value (Reference) | $Mn_t$ | | | | |
| 91* | 99.221 | 0.000 | 0.000 | 0.000 | 0.779 | 0.779 | 0.100 | 18 | 200 | 302 | 133 |
| 92* | 96.834 | 2.500 | 0.000 | 2.500 | 0.666 | 0.716 | 0.100 | 32 | 280 | 399 | 134 |
| 93 | 96.784 | 2.500 | 0.000 | 2.500 | 0.716 | 0.716 | 0.100 | 25 | 450 | 361 | 133 |
| 94 | 96.734 | 2.500 | 0.000 | 2.500 | 0.766 | 0.716 | 0.100 | 32 | 500 | 404 | 133 |
| 95 | 79.726 | 20.000 | 0.000 | 20.000 | 0.274 | 0.274 | 0.100 | 111 | 710 | 618 | 118 |
| 96* | 77.289 | 22.500 | 0.000 | 22.500 | 0.211 | 0.211 | 0.100 | 166 | 900 | 688 | 111 |
| 97* | 94.411 | 0.000 | 5.000 | 5.000 | 0.589 | 0.589 | 0.100 | 32 | 315 | 399 | 117 |
| 98 | 91.953 | 2.500 | 5.000 | 7.500 | 0.547 | 0.547 | 0.100 | 32 | 450 | 399 | 118 |
| 99* | 79.713 | 15.000 | 5.000 | 20.000 | 0.287 | 0.337 | 0.100 | 29 | 315 | 384 | 115 |
| 100 | 79.663 | 15.000 | 5.000 | 20.000 | 0.337 | 0.337 | 0.100 | 20 | 400 | 319 | 117 |
| 101 | 79.613 | 15.000 | 5.000 | 20.000 | 0.387 | 0.337 | 0.100 | 32 | 500 | 404 | 116 |
| 102* | 77.205 | 17.500 | 5.000 | 22.500 | 0.295 | 0.295 | 0.100 | 41 | 560 | 443 | 109 |
| 103* | 82.109 | 10.000 | 7.500 | 17.500 | 0.391 | 0.391 | 0.100 | 20 | 355 | 320 | 106 |
| 104* | 87.233 | 10.000 | 2.500 | 12.500 | 0.267 | 0.267 | 0.020 | 15 | 160 | 270 | 129 |
| 105 | 87.209 | 10.000 | 2.500 | 12.500 | 0.291 | 0.291 | 0.030 | 16 | 315 | 282 | 124 |
| 106 | 86.912 | 10.000 | 2.500 | 12.500 | 0.588 | 0.588 | 0.150 | 588 | 1120 | 908 | 123 |
| 107* | 86.863 | 10.000 | 2.500 | 12.500 | 0.637 | 0.637 | 0.170 | 1829 | - | 1105 | 121 |

EP 2 695 869 B1

Sample numbers 91 and 97 with the small Ca amount x of 0.000 have resulted in voltage resistance values smaller than the lower limits of voltage resistance.

Sample number 96 with the large Ca amount x of 22.500 has resulted in a low double resistance point. In addition, sample numbers 96 and 102 with the large total amount x+y of Ca and Sr of 22.500 have resulted in low double resistance points. In addition, sample number 103 with the large Sr amount y of 7.500 has resulted in a low double resistance point.

Sample numbers 92 to 94 have the Y amount z varied under the conditions of x = 2.500, y = 0.000, and t = 0.100. Sample number 92 with the small Y amount z has a voltage resistance value of 280, which is smaller as compared with the lower limit of voltage resistance: 399. On the other hand, sample numbers 93 and 94 with the Y amount z not lower than the Y calculated value have resulted in voltage resistance values larger than the lower limits of voltage resistance.

Sample numbers 99 to 101 have the Y amount z varied under the conditions of x = 15.000, y = 5.000, and t = 0.100. Sample number 99 with the small Y amount z has a voltage resistance value of 315, which is smaller than the lower limit of voltage resistance. On the other hand, sample numbers 100 and 101 with the Y amount z not lower than the Y calculated value have resulted in voltage resistance values larger than the lower limits of voltage resistance.

Sample number 104 with the small Mn amount t of 0.020 has resulted in a voltage resistance value smaller than the lower limit of voltage resistance. In addition, sample number 107 with the large Mn amount t of 0.170 has resulted in a large value of 1829 for the resistivity.

In addition, sample numbers 95, 98, 105, and 106 exhibited favorable voltage resistance values and favorable values for the double resistance point.

[Experimental Example 6]

In Experimental Example 6, the resistivity, voltage resistance, and double resistance point were figured out in the case of varying each value of x, y, z and t with the use of Gd as the semiconductivity-imparting agent Smc. The double resistance point refers to a temperature at which the resistance value at 25°C is doubled.

Table 7 shows the results. The calculated values from the $f_3(x,y,t)$ with the use of the formula (3) are listed as the Y calculated value.

$$\text{Formula (3): } z_{min} = 0.63 \times [(30-x)(30-y)(1+15t)/\{125(20+y)\}+(5+3y)/200]$$

In addition, the lower limit of voltage resistance at the resistivity is shown for each sample. Samples with the resistivity of 1000 Ω·cm or less without any practical problems were regarded as non-defective products. In addition, samples with the double resistance point of 115 to 140°C were regarded as non-defective products.

[Table 7]

| Sample Number | 100 (Ba$_{1-(x+y+z)100}$Ca$_{x/100}$Sr$_{y/100}$Gd$_{z/100}$)TiO$_3$+tMn | | | | | | | Resistivity [ρ·cm] | Voltage Resistance [V] | Lower Limit of Voltage Resistance (Reference) | Double Resistance Point [°C] |
|---|---|---|---|---|---|---|---|---|---|---|---|
| | Ba 100- (x+y+z) | Ca$_x$ | Sr$_y$ | Ca+Sr x+y | Gd$_z$ | Gd Calculated Value (Reference) | Mn$_t$ | | | | |
| 111* | 99.416 | 0.000 | 0.000 | 0.000 | 0.584 | 0.584 | 0.100 | 15 | 180 | 267 | 132 |
| 112* | 97.013 | 2.500 | 0.000 | 2.500 | 0.487 | 0.537 | 0.100 | 26 | 250 | 364 | 134 |
| 113 | 96.963 | 2.500 | 0.000 | 2.500 | 0.537 | 0.537 | 0.100 | 21 | 355 | 325 | 133 |
| 114 | 96.913 | 2.500 | 0.000 | 2.500 | 0.587 | 0.537 | 0.100 | 26 | 450 | 369 | 132 |
| 115 | 79.795 | 20.000 | 0.000 | 20.000 | 0.205 | 0.205 | 0.100 | 90 | 630 | 582 | 120 |
| 116* | 77.342 | 22.500 | 0.000 | 22.500 | 0.158 | 0.158 | 0.100 | 135 | 760 | 652 | 112 |
| 117* | 94.558 | 0.000 | 5.000 | 5.000 | 0.442 | 0.442 | 0.100 | 26 | 280 | 364 | 117 |
| 118 | 92.089 | 2.500 | 5.000 | 7.500 | 0.411 | 0.411 | 0.100 | 26 | 400 | 364 | 117 |
| 119* | 79.797 | 15.000 | 5.000 | 20.000 | 0.203 | 0.253 | 0.100 | 23 | 280 | 348 | 116 |
| 120 | 79.747 | 15.000 | 5.000 | 20.000 | 0.253 | 0.253 | 0.100 | 16 | 355 | 283 | 118 |
| 121 | 79.697 | 15.000 | 5.000 | 20.000 | 0.303 | 0.253 | 0.100 | 26 | 400 | 369 | 116 |
| 122* | 77.279 | 17.500 | 5.000 | 22.500 | 0.221 | 0.221 | 0.100 | 33 | 450 | 407 | 108 |
| 123* | 82.206 | 10.000 | 7.500 | 17.500 | 0.294 | 0.294 | 0.100 | 16 | 355 | 282 | 104 |
| 124* | 87.300 | 10.000 | 2.500 | 12.500 | 0.200 | 0.200 | 0.020 | 13 | 160 | 246 | 129 |
| 125 | 87.281 | 10.000 | 2.500 | 12.500 | 0.219 | 0.219 | 0.030 | 13 | 280 | 246 | 124 |
| 126 | 87.059 | 10.000 | 2.500 | 12.500 | 0.441 | 0.441 | 0.150 | 477 | 1120 | 871 | 123 |
| 127* | 87.022 | 10.000 | 2.500 | 12.500 | 0.478 | 0.478 | 0.170 | 1483 | - | 1068 | 121 |

Sample numbers 111 and 117 with the small Ca amount x of 0.000 have resulted in voltage resistance values smaller than the lower limits of voltage resistance.

Sample number 116 with the large Ca amount x of 22.500 has resulted in a low double resistance point. In addition, sample numbers 116 and 122 with the large total amount x+y of Ca and Sr of 22.500 have resulted in low double resistance points. In addition, sample number 123 with the large Sr amount y of 7.500 has resulted in a low double resistance point.

Sample numbers 112 to 114 have the Gd amount z varied under the conditions of x = 2.500, y = 0.000, and t = 0.100. Sample number 112 with the small Gd amount z has a voltage resistance value of 250, which is smaller as compared with the lower limit of voltage resistance: 364. On the other hand, sample numbers 113 and 114 with the Gd amount z not lower than the Gd calculated value have resulted in voltage resistance values larger than the lower limits of voltage resistance.

Sample numbers 119 to 121 have the Gd amount z varied under the conditions of x = 15.000, y = 5.000, and t = 0.100. Sample number 119 with the small Gd amount z has a voltage resistance value of 280, which is smaller than the lower limit of voltage resistance. On the other hand, sample numbers 120 and 121 with the Gd amount z not lower than the Gd calculated value have resulted in voltage resistance values larger than the lower limits of voltage resistance.

Sample number 124 with the small Mn amount t of 0.020 has resulted in a voltage resistance value smaller than the lower limit of voltage resistance. In addition, sample number 127 with the large Mn amount t of 0.170 has resulted in a large value of 1483 for the resistivity.

In addition, sample numbers 115, 118, 125, and 126 exhibited favorable voltage resistance values and favorable values for the double resistance point.

[Experimental Example 7]

In Experimental Example 7, the resistivity, voltage resistance, and double resistance point were figured out in the case of varying each value of x, y, z and t with the use of Bi as the semiconductivity-imparting agent Smc. The double resistance point refers to a temperature at which the resistance value at 25°C is doubled.

Table 8 shows the results. The calculated values from the $f_3(x,y,t)$ with the use of the formula (4) are listed as the Y calculated value.

$$\text{Formula (4): } z_{min} = 0.68 \times [(30-x)(30-y)(1+15t)/\{125(20+y)\}+(5+3y)/200]$$

In addition, the lower limit of voltage resistance at the resistivity is shown for each sample. Samples with the resistivity of 1000 Ω·cm or less without any practical problems were regarded as non-defective products. In addition, samples with the double resistance point of 115 to 140°C were regarded as non-defective products.

[Table 8]

| Sample Number | 100(Ba$_{1-(x+y+z)/100}$ Ca$_{x/100}$Sr$_{y/100}$Bi$_{z/100}$)TiO$_3$+tMn | | | | | | | Resistivity [ρ·cm] | Voltage Resistance [V] | Lower Limit of Voltage Resistance (Reference) | Double Resistance Point [°C] |
|---|---|---|---|---|---|---|---|---|---|---|---|
| | Ba 100-(x+y+z) | Ca$_x$ | Sr$_y$ | Ca+Sr x+y | Bi$_z$ | Bi Calculated Value (Reference) | Mn$_t$ | | | | |
| 131* | 99 367 | 0.000 | 0.000 | 0.000 | 0.633 | 0.633 | 0.100 | 13 | 180 | 250 | 135 |
| 132* | 96.968 | 2.500 | 0.000 | 2.500 | 0.532 | 0.582 | 0.100 | 23 | 220 | 347 | 135 |
| 133 | 96.918 | 2.500 | 0.000 | 2.500 | 0.582 | 0.582 | 0.100 | 19 | 315 | 308 | 134 |
| 134 | 96.868 | 2.500 | 0.000 | 2.500 | 0.632 | 0.582 | 0.100 | 24 | 400 | 352 | 134 |
| 135 | 79.778 | 20.000 | 0.000 | 20.000 | 0.222 | 0.222 | 0.100 | 82 | 630 | 566 | 120 |
| 136* | 77.329 | 22.500 | 0.000 | 22.500 | 0.171 | 0.171 | 0.100 | 123 | 800 | 635 | 113 |
| 137* | 94.521 | 0.000 | 5.000 | 5.000 | 0.479 | 0.479 | 0.100 | 23 | 280 | 347 | 118 |
| 138 | 92.055 | 2.500 | 5.000 | 7.500 | 0.445 | 0.445 | 0.100 | 23 | 400 | 347 | 117 |
| 139* | 79.776 | 15.000 | 5.000 | 20.000 | 0.224 | 0.274 | 0.100 | 21 | 280 | 332 | 118 |
| 140 | 79.726 | 15.000 | 5.000 | 20.000 | 0.274 | 0.274 | 0.100 | 15 | 355 | 267 | 119 |
| 141 | 79.676 | 15.000 | 5.000 | 20.000 | 0.324 | 0.274 | 0.100 | 24 | 450 | 352 | 117 |
| 142* | 77.261 | 17.500 | 5.000 | 22.500 | 0.239 | 0.239 | 0.100 | 30 | 450 | 391 | 111 |
| 143* | 82.182 | 10.000 | 7.500 | 17.500 | 0.318 | 0.318 | 0.100 | 15 | 355 | 270 | 105 |
| 144* | 87.283 | 10.000 | 2.500 | 12.500 | 0.217 | 0.217 | 0.020 | 12 | 180 | 232 | 130 |
| 145 | 87.263 | 10.000 | 2.500 | 12.500 | 0.237 | 0.237 | 0.030 | 12 | 315 | 232 | 125 |
| 146 | 87.022 | 10.000 | 2.500 | 12.500 | 0.478 | 0.478 | 0.150 | 438 | 1120 | 856 | 125 |
| 147* | 86.982 | 10.000 | 2.500 | 12.500 | 0.518 | 0.518 | 0.170, | 1361 | - | 1054 | 123 |

EP 2 695 869 B1

Sample numbers 131 and 137 with the small Ca amount x of 0.000 have resulted in voltage resistance values smaller than the lower limits of voltage resistance.

Sample number 136 with the large Ca amount x of 22.500 has resulted in a low double resistance point. In addition, sample numbers 136 and 142 with the large total amount x+y of Ca and Sr of 22.500 have resulted in low double resistance points. In addition, sample number 143 with the large Sr amount y of 7.500 has resulted in a low double resistance point.

Sample numbers 132 to 134 have the Bi amount z varied under the conditions of x = 2.500, y = 0.000, and t = 0.100. Sample number 132 with the small Bi amount z has a voltage resistance value of 220, which is smaller as compared with the lower limit of voltage resistance: 347. On the other hand, sample numbers 133 and 134 with the Bi amount z not lower than the Bi calculated value have resulted in voltage resistance values larger than the lower limits of voltage resistance.

Sample numbers 139 to 141 have the Bi amount z varied under the conditions of x = 15.000, y = 5.000, and t = 0.100. Sample number 139 with the small Bi amount z has a voltage resistance value of 280, which is smaller than the lower limit of voltage resistance. On the other hand, sample numbers 140 and 141 with the Bi amount z not lower than the Bi calculated value have resulted in voltage resistance values larger than the lower limits of voltage resistance.

Sample number 144 with the small Mn amount t of 0.020 has resulted in a voltage resistance value smaller than the lower limit of voltage resistance. In addition, sample number 147 with the large Mn amount t of 0.170 has resulted in a large value of 1361 for the resistivity.

In addition, sample numbers 135, 138, 145, and 146 exhibited favorable voltage resistance values and favorable values for the double resistance point.

[Experimental Example 8]

In Experimental Example 8, the resistivity, voltage resistance, and double resistance point were figured out in the case of varying each value of x, y, z and t with the use of Nd as the semiconductivity-imparting agent Smc. The double resistance point refers to a temperature at which the resistance value at 25°C is doubled.

Table 9 shows the results. The calculated values from the $f_3(x,y,t)$ with the use of the formula (5) are listed as the Y calculated value.

$$\text{Formula (5): } z_{min} = 0.42 \times [(30-x)(30-y)(1+15t)/\{125(20+y)\}+(5+3y)/200]$$

In addition, the lower limit of voltage resistance at the resistivity is shown for each sample. Samples with the resistivity of 1000 Ω·cm or less without any practical problems were regarded as non-defective products. In addition, samples with the double resistance point of 115 to 140°C were regarded as non-defective products.

[Table 9]

| Sample Number | Ba $100-(x+y+z)$ | $Ca_x$ | $Sr_y$ | Ca+Sr $x+y$ | $Nd_z$ | Nd Calculated Value (Reference) | $Mn_t$ | Resistivity [ρ·cm] | Voltage Resistance [V] | Lower Limit of Voltage Resistance (Reference) | Double Resistance Point [°C] |
|---|---|---|---|---|---|---|---|---|---|---|---|
| 151* | 99.611 | 0.000 | 0.000 | 0.000 | 0.389 | 0.389 | 0.100 | 10 | 140 | 200 | 132 |
| 152* | 97.192 | 2.500 | 0.000 | 2.500 | 0.308 | 0.358 | 0.100 | 18 | 220 | 297 | 131 |
| 153 | 97.142 | 2.500 | 0.000 | 2.500 | 0.358 | 0.358 | 0.100 | 14 | 315 | 258 | 131 |
| 154 | 97.092 | 2.500 | 0.000 | 2.500 | 0.408 | 0.358 | 0.100 | 18 | 400 | 302 | 131 |
| 155 | 79.863 | 20.000 | 0.000 | 20.000 | 0.137 | 0.137 | 0.100 | 62 | 630 | 516 | 115 |
| 156* | 77.395 | 22.500 | 0.000 | 22.500 | 0.105 | 0.105 | 0.100 | 92 | 710 | 586 | 109 |
| 157* | 94.705 | 0.000 | 5.000 | 5.000 | 0.295 | 0.295 | 0.100 | 18 | 250 | 297 | 117 |
| 158 | 92.226 | 2.500 | 5.000 | 7.500 | 0.274 | 0.274 | 0.100 | 18 | 355 | 297 | 116 |
| 159* | 79.882 | 15.000 | 5.000 | 20.000 | 0.118 | 0.168 | 0.100 | 16 | 220 | 282 | 116 |
| 160 | 79.832 | 15.000 | 5.000 | 20.000 | 0.168 | 0.168 | 0.100 | 11 | 280 | 217 | 115 |
| 161 | 79.782 | 15.000 | 5.000 | 20.000 | 0.218 | 0.168 | 0.100 | 18 | 355 | 302 | 115 |
| 162* | 77.353 | 17.500 | 5.000 | 22.500 | 0.147 | 0.147 | 0.100 | 23 | 400 | 341 | 107 |
| 163* | 82.304 | 10.000 | 7.500 | 17.500 | 0.196 | 0.196 | 0.100 | 12 | 280 | 232 | 102 |
| 164* | 87.367 | 10.000 | 2.500 | 12.500 | 0.133 | 0.133 | 0.020 | 9 | 140 | 172 | 126 |
| 165 | 87.354 | 10.000 | 2.500 | 12.500 | 0.146 | 0.146 | 0.030 | 10 | 250 | 200 | 124 |
| 166 | 87.206 | 10.000 | 2.500 | 12.500 | 0.294 | 0.294 | 0.150 | 327 | 1000 | 806 | 120 |
| 167* | 87.181 | 10.000 | 2.500 | 12.500 | 0.319 | 0.319 | 0.170 | 1016 | - | 1003 | 119 |

$100(Ba_{1-(x+y+z)/100}Ca_{x/100}Sr_{y/100}Nd_{z/100})TiO_3+tMn$

Sample numbers 151 and 157 with the small Ca amount x of 0.000 have resulted in voltage resistance values smaller than the lower limits of voltage resistance.

Sample number 156 with the large Ca amount x of 22.500 has resulted in a low double resistance point. In addition, sample numbers 156 and 162 with the large total amount x+y of Ca and Sr of 22.500 have resulted in low double resistance points. In addition, sample number 163 with the large Sr amount y of 7.500 has resulted in a low double resistance point.

Sample numbers 152 to 154 have the Nd amount z varied under the conditions of x = 2.500, y = 0.000, and t = 0.100. Sample number 152 with the small Nd amount z has a voltage resistance value of 220, which is smaller as compared with the lower limit of voltage resistance: 297. On the other hand, sample numbers 153 and 154 with the Nd amount z not lower than the Nd calculated value have resulted in voltage resistance values larger than the lower limits of voltage resistance.

Sample numbers 159 to 161 have the Nd amount z varied under the conditions of x = 15.000, y = 5.000, and t = 0.100. Sample number 159 with the small Nd amount z has a voltage resistance value of 220, which is smaller than the lower limit of voltage resistance. On the other hand, sample numbers 160 and 161 with the Nd amount z not lower than the Nd calculated value have resulted in voltage resistance values larger than the lower limits of voltage resistance.

Sample number 164 with the small Mn amount t of 0.020 has resulted in a voltage resistance value smaller than the lower limit of voltage resistance. In addition, sample number 167 with the large Mn amount t of 0.170 has resulted in a large value of 1016 for the resistivity.

In addition, sample numbers 155, 158, 165, and 166 exhibited favorable voltage resistance values and favorable values for the double resistance point.

DESCRIPTION OF REFERENCE SYMBOLS

1       positive temperature coefficient thermistor element
11     component body
12, 13  electrode

**Claims**

**1.** A semiconductor ceramic containing, as its main constituent, a compound represented by a general formula $(Ba_{1-(x+y+z)/100}Ca_{x/100}Sr_{y/100}Smc_{z/100})TiO_3$, where Smc represents a semiconductivity-imparting agent selected from the group consisting of Er, Dy, Y, Gd, Bi and Nd, and containing Mn in a proportion of t parts by mol with respect to 100 parts by mol of the main constituent, wherein the x, y, z and t satisfy relationships of:

$$2.500 \le x \le 20.000;$$

$$0.000 \le y \le 5.000;$$

$$2.500 \le x + y \le 20.000;$$

$$0.030 \le t \le 0.150;$$

and

$$z \ge K \times [(30-x)(30-y)(1+15t)/\{125(20+y)\} + (5+3y)/200];$$

with the provisos that K = 1 if Smc is Er; K = 0.84 if Smc is Dy or Y; K = 0.63 if Smc is Gd; K = 0.68 if Smc is Bi; and K = 0.42 if Smc is Nd.

2. The semiconductor ceramic according to claim 1, wherein the semiconductivity-imparting agent Smc is Er, the ceramic contains, as its main constituent, a compound represented by a general formula $(Ba_{1-(x+y+z)/100}Ca_{x/100}Sr_{y/100}Er_{z/100})TiO_3$, the ceramic contains Mn in a proportion of t parts by mol with respect to 100 parts by mol of the main constituent, and the x, y, z and t satisfy relationships of:

$$2.500 \le x \le 20.000;$$

$$0.000 \le y \le 5.000;$$

$$2.500 \le x + y \le 20.000,$$

$$0.030 \le t \le 0.150;$$

and

$$z \ge (30\text{-}x)(30\text{-}y)(1+15t)/\{125(20+y)\} + (5+3y)/200.$$

3. The semiconductor ceramic according to claim 1, wherein the semiconductivity-imparting agent Smc is Dy, the ceramic contains, as its main constituent, a compound represented by a general formula $(Ba_{1\ (x+y+z)/100}Ca_{x/100}Sr_{y/100}Dy_{z/100})TiO_3$, the ceramic contains Mn in a proportion of t parts by mol with respect to 100 parts by mol of the main constituent, and the x, y, z and t satisfy relationships of:

$$2.500 \le x \le 20.000;$$

$$0.000 \le y \le 5.000;$$

$$2.500 \le x + y \le 20.000,$$

$$0.030 \le t \le 0.150;$$

and

$$z \ge 0.84 \times [(30\text{-}x)(30\text{-}y)(1+15t)/\{125(20+y)\} + (5+3y)/200].$$

4. The semiconductor ceramic according to claim 1, wherein the semiconductivity-imparting agent Smc is Y, the ceramic contains, as its main constituent, a compound represented by a general formula $(Ba_{1-(x+y+z)/100}Ca_{x/100}Sr_{y/100}Y_{z/100})TiO_3$, the ceramic contains Mn in a proportion of t parts by mol with respect to 100 parts by mol of the main constituent, and the x, y, z and t satisfy relationships of:

$$2.500 \le x \le 20.000;$$

$$0.000 \le y \le 5.000;$$

$$2.500 \leq x + y \leq 20.000,$$

$$0.030 \leq t \leq 0.150;$$

and

$$z \geq 0.84 \times [(30-x)(30-y)(1+15t)/\{125(20+y)\} + (5+3y)/200].$$

5. The semiconductor ceramic according to claim 1, wherein the semiconductivity-imparting agent Smc is Gd, the ceramic contains, as its main constituent, a compound represented by a general formula $(Ba_{1\ (x+y+z)/100}Ca_{x/100}Sr_{y/100}Gd_{z/100})TiO_3$, the ceramic contains Mn in a proportion of t parts by mol with respect to 100 parts by mol of the main constituent, and the x, y, z and t satisfy relationships of:

$$2.500 \leq x \leq 20.000;$$

$$0.000 \leq y \leq 5.000;$$

$$2.500 \leq x + y \leq 20.000,$$

$$0.030 \leq t \leq 0.150;$$

and

$$z \geq 0.63 \times [(30-x)(30-y)(1+15t)/\{125(20+y)\} + (5+3y)/200].$$

6. The semiconductor ceramic according to claim 1, wherein the semiconductivity-imparting agent Smc is Bi, the ceramic contains, as its main constituent, a compound represented by a general formula $(Ba_{1\ (x+y+z)/100}Ca_{x/100}Sr_{y/100}Bi_{z/100})TiO_{3\,z/100})TiO_3$, the ceramic contains Mn in a proportion of t parts by mol with respect to 100 parts by mol of the main constituent, and the x, y, z and t satisfy relationships of:

$$2.500 \leq x \leq 20.000;$$

$$0.000 \leq y \leq 5.000;$$

$$2.500 \leq x + y \leq 20.000,$$

$$0.030 \leq t \leq 0.150;$$

and

$$z \geq 0.68 \times [(30-x)(30-y)(1+15t)/\{125(20+y)\} + (5+3y)/200].$$

7. The semiconductor ceramic according to claim 1, wherein the semiconductivity-imparting agent Smc is Nd, the ceramic contains, as its main constituent, a compound represented by a general formula $(Ba_{1-(x+y+z)/100}Ca_{x/100}Sr_{y/100}Nd_{z/100})TiO_3$, the ceramic contains Mn in a proportion of t parts by mol with respect to 100 parts by mol of the main constituent, and the x, y, z and t satisfy relationships of:

$$2.500 \leq x \leq 20.000;$$

$$0.000 \leq y \leq 5.000;$$

$$2.500 \leq x + y \leq 20.000,$$

$$0.030 \leq t \leq 0.150;$$

and

$$z \geq 0.42 \times [(30-x)(30-y)(1+15t)/\{125(20+y)\} + (5+3y)/200].$$

8. A positive temperature coefficient thermistor comprising a pair of external electrodes formed on a surface of a component body, wherein the component body is formed from the semiconductor ceramic according to any one of claims 1 to 7.

**Patentansprüche**

1. Halbleitende Keramik, die als Hauptbestandteil eine durch die Formel $(Ba_{1-(x+y+z)/100}Ca_{x/100}Sr_{y/100}Smc_{z/100})TiO_3$, repräsentierte Verbindung enthält, wo Smc ein Semikonduktivität verleihendes Mittel repräsentiert, das aus der aus Er, Dy, Y, Gd, Bi und Nd bestehenden Gruppe ausgewählt ist und Mn in einem Anteil von t Molteilen bezogen auf 100 Molteile des Hauptbestandteils enthält, wobei x, y, z und t den folgenden Beziehungen genügen:

$$2,500 \leq x \leq 20,000;$$

$$0,000 \leq y \leq 5,000;$$

$$2,500 \leq x+y \leq 20,000;$$

$$0,030 \leq t \leq 0,150;$$

und

$$z \geq K \times [(30-x)(30-y)(1+15t)/\{125(20+y)\} + (5+3y)/200];$$

mit der Maßgabe, dass K = 1, wenn Smc Er ist; K = 0,84, wenn Smc Dy oder Y ist; K = 0,63, wenn Smc Gd ist; K = 0,68, wenn Smc Bi ist; und K = 0,42, wenn Smc Nd ist.

2. Halbleitende Keramik nach Anspruch 1, wobei das Semikonduktivität verleihende Mittel Smc Er ist, die Keramik als Hauptbestandteil eine durch eine allgemeine Formel $(Ba_{1-(x+y+z)/100}Ca_{x/100}Sr_{y/100}Er_{z/100})TiO_3$, repräsentierte Verbindung enthält, die Keramik Mn in einem Anteil von t Molteilen bezogen auf 100 Molteile des Hauptbestandteils enthält, und x, y, z und t den folgenden Beziehungen genügen:

$$2{,}500 \leq x \leq 20{,}000;$$

$$0{,}000 \leq y \leq 5{,}000;$$

$$2{,}500 \leq x+y \leq 20{,}000;$$

$$0{,}030 \leq t \leq 0{,}150;$$

und

$$z \geq (30-x)(30-y)(1+15t)/\{125(20+y)\} + (5+3y)/200.$$

3. Halbleitende Keramik nach Anspruch 1, wobei das Semikonduktivität verleihende Mittel Smc Dy ist, die Keramik als Hauptbestandteil eine durch eine allgemeine Formel $(Ba_{1-(x+y+z)/100}Ca_{x/100}Sr_{y/100}Dy_{z/100})TiO_3$, repräsentierte Verbindung enthält, die Keramik Mn in einem Anteil von t Molteilen bezogen auf 100 Molteile des Hauptbestandteils enthält, und x, y, z und t den folgenden Beziehungen genügen:

$$2{,}500 \leq x \leq 20{,}000;$$

$$0{,}000 \leq y \leq 5{,}000;$$

$$2{,}500 \leq x+y \leq 20{,}000;$$

$$0{,}030 \leq t \leq 0{,}150;$$

und

$$z \geq 0{,}84 \; x \; [(30-x)(30-y)(1+15t)/\{125(20+y)\} + (5+3y)/200].$$

4. Halbleitende Keramik nach Anspruch 1, wobei das Semikonduktivität verleihende Mittel Smc Y ist, die Keramik als Hauptbestandteil eine durch eine allgemeine Formel $(Ba_{1-(x+y+z)/100}Ca_{x/100}Sr_{y/100}Y_{z/100})TiO_3$, repräsentierte Verbindung enthält, die Keramik Mn in einem Anteil von t Molteilen bezogen auf 100 Molteile des Hauptbestandteils enthält, und x, y, z und t den folgenden Beziehungen genügen:

$$2{,}500 \leq x \leq 20{,}000;$$

$$0{,}000 \leq y \leq 5{,}000;$$

$$2{,}500 \leq x+y \leq 20{,}000;$$

$$0{,}030 \leq t \leq 0{,}150; \iota$$

und

$$z \geq 0{,}84 \times [(30\text{-}x)(30\text{-}y)(1+15t)/\{125(20+y)\} + (5+3y)/200].$$

5. Halbleitende Keramik nach Anspruch 1, wobei das Semikonduktivität verleihende Mittel Smc Gd ist, die Keramik als Hauptbestandteil eine durch eine allgemeine Formel $(Ba_{1\text{-}(x+y+z)/100}Ca_{x/100}Sr_{y/100}Gd_{z/100})TiO_3$, repräsentierte Verbindung enthält, die Keramik Mn in einem Anteil von t Molteilen bezogen auf 100 Molteile des Hauptbestandteils enthält, und x, y, z und t den folgenden Beziehungen genügen:

$$2{,}500 \leq x \leq 20{,}000;$$

$$0{,}000 \leq y \leq 5{,}000;$$

$$2{,}500 \leq x+y \leq 20{,}000;$$

$$0{,}030 \leq t \leq 0{,}150;$$

und

$$z \geq 0{,}63 \times [(30\text{-}x)(30\text{-}y)(1+15t)/\{125(20+y)\} + (5+3y)/200].$$

6. Halbleitende Keramik nach Anspruch 1, wobei das Semikonduktivität verleihende Mittel Smc Bi ist, die Keramik als Hauptbestandteil eine durch eine allgemeine Formel $(Ba_{1\text{-}(x+y+z)/100}Ca_{x/100}Sr_{y/100}Bi_{z/100})TiO_3$, repräsentierte Verbindung enthält, die Keramik Mn in einem Anteil von t Molteilen bezogen auf 100 Molteile des Hauptbestandteils enthält, und x, y, z und t den folgenden Beziehungen genügen:

$$2{,}500 \leq x \leq 20{,}000;$$

$$0{,}000 \leq y \leq 5{,}000;$$

$$2{,}500 \leq x+y \leq 20{,}000;$$

$$0{,}030 \leq t \leq 0{,}150;$$

und

$$z \geq 0{,}68 \times [(30\text{-}x)(30\text{-}y)(1+15t)/\{125(20+y)\} + (5+3y)/200].$$

7. Halbleitende Keramik nach Anspruch 1, wobei das Semikonduktivität verleihende Mittel Smc Nd ist, die Keramik als Hauptbestandteil eine durch eine allgemeine Formel $(Ba_{1\text{-}(x+y+z)/100}Ca_{x/100}Sr_{y/100}Nd_{z/100})TiO_3$, repräsentierte Verbindung enthält, die Keramik Mn in einem Anteil von t Molteilen bezogen auf 100 Molteile des Hauptbestandteils enthält, und x, y, z und t den folgenden Beziehungen genügen:

$$2{,}500 \leq x \leq 20{,}000;$$

$$0,000 \le y \le 5,000;$$

$$2,500 \le x+y \le 20,000;$$

$$0,030 \le t \le 0,150;$$

und

$$z \ge 0,42 \; x \; [(30-x)(30-y)(1+15t)/\{125(20+y)\} + (5+3y)/200].$$

8. Thermistor mit positivem Temperaturkoeffizienten, der zwei auf einer Oberfläche eines Bauteilkörpers gebildete äußere Elektroden umfasst, wobei der Bauteilkörper aus der halbleitenden Keramik nach einem der Ansprüche 1 bis 7 gebildet ist.

**Revendications**

1. Céramique semi-conductrice, qui contient comme composant principal un composé représenté par une formule générale $(Ba_{1-(x+y+z)/100}Ca_{x/100}Sr_{y/100}Sm_{z/100})TiO_3$, dans laquelle Smc représente un agent conférant une semi-conductivité, qui est choisi parmi le groupe constitué par Er, Dy, Y, Gd, Bi et Nd et contenant Mn dans une proportion de t parties en mol par rapport à 100 parties en mol du composant principal, x, y, z et t satisfont au relations suivantes :

$$2,500 \le x \le 20,000;$$

$$0,000 \le y \le 5,000;$$

$$2,500 \le x+y \le 20,000;$$

$$0,030 \le t \le 0,150;$$

und

$$z \ge K \; x \; [(30-x)(30-y)(1+15t)/\{125(20+y)\} + (5+3y)/200];$$

sous réserve que K = 1, si Smc est Er; K = 0,84, si Smc est Dy ou Y; K = 0,63, si Smc est Gd; K = 0,68, si Smc est Bi; et K = 0,42, si Smc est Nd.

2. Céramique semi-conductrice selon la revendication 1, dans laquelle l'agent conférant une semi-conductivité Smc est Er, la céramique contient comme composant principal un composé représenté par une formule générale $(Ba_{1-(x+y+z)/100}Ca_{x/100}Sr_{y/100}Er_{z/100})TiO_3$, la céramique contient Mn dans une proportion de t parties en mol par rapport à 100 parties en mol du composant principal, et x, y, z et t satisfont aux relations suivantes :

$$2,500 \le x \le 20,000;$$

$$0,000 \le y \le 5,000;$$

$$2{,}500 \le x+y \le 20{,}000;$$

$$0{,}030 \le t \le 0{,}150;$$

et

$$z \ge (30-x)(30-y)(1+15t)/\{125(20+y)\} + (5+3y)/200.$$

**3.** Céramique semi-conductrice selon la revendication 1, dans laquelle l'agent conférant une semi-conductivité Smc est Dy, la céramique contient comme composant principal un composé représenté par une formule générale $(Ba_{1-(x+y+z)/100}Ca_{x/100}Sr_{y/100}Dy_{z/100})TiO_3$, la céramique contient Mn dans une proportion de t parties en mol par rapport à 100 parties en mol du composant principal, et x, y, z et t satisfont aux relations suivantes :

$$2{,}500 \le x \le 20{,}000;$$

$$0{,}000 \le y \le 5{,}000;$$

$$2{,}500 \le x+y \le 20{,}000;$$

$$0{,}030 \le t \le 0{,}150;$$

et

$$z \ge 0{,}84 \times [(30-x)(30-y)(1+15t)/\{125(20+y)\} + (5+3y)/200].$$

**4.** Céramique semi-conductrice selon la revendication 1, dans laquelle l'agent conférant une semi-conductivité Smc est Y, la céramique contient comme composant principal un composé représenté par une formule générale $(Ba_{1-(x+y+z)/100}Ca_{x/100}Sr_{y/100}Y_{z/100})TiO_3$, la céramique contient Mn dans une proportion de t parties en mol par rapport à 100 parties en mol du composant principal, et x, y, z et t satisfont aux relations suivantes :

$$2{,}500 \le x \le 20{,}000;$$

$$0{,}000 \le y \le 5{,}000;$$

$$2{,}500 \le x+y \le 20{,}000;$$

$$0{,}030 \le t \le 0{,}150;$$

et

$$z \ge 0{,}84 \times [(30-x)(30-y)(1+15t)/\{125(20+y)\} + (5+3y)/200].$$

**5.** Céramique semi-conductrice selon la revendication 1, dans laquelle l'agent conférant une semi-conductivité Smc est Gd, la céramique contient comme composant principal un composé représenté par une formule générale $(Ba_{1-(x+y+z)/100}Ca_{x/100}Sr_{y/100}Gd_{z/100})TiO_3$, la céramique contient Mn dans une proportion de t parties en mol par rapport à 100 parties en mol du composant principal, et x, y, z et t satisfont aux relations suivantes :

$$2{,}500 \leq x \leq 20{,}000;$$

$$0{,}000 \leq y \leq 5{,}000;$$

$$2{,}500 \leq x+y \leq 20{,}000;$$

$$0{,}030 \leq t \leq 0{,}150;$$

et

$$z \geq 0{,}63 \times [(30-x)(30-y)(1+15t)/\{125(20+y)\} + (5+3y)/200].$$

6. Céramique semi-conductrice selon la revendication 1, dans laquelle l'agent conférant une semi-conductivité Smc est Bi, la céramique contient comme composant principal un composé représenté par une formule générale $(Ba_{1-(x+y+z)/100}Ca_{x/100}Sr_{y/100}Bi_{z/100})TiO_3$, la céramique contient Mn dans une proportion de t parties en mol par rapport à 100 parties en mol du composant principal, et x, y, z et t satisfont aux relations suivantes :

$$2{,}500 \leq x \leq 20{,}000;$$

$$0{,}000 \leq y \leq 5{,}000;$$

$$2{,}500 \leq x+y \leq 20{,}000;$$

$$0{,}030 \leq t \leq 0{,}150;$$

et

$$z \geq 0{,}68 \times [(30-x)(30-y)(1+15t)/\{125(20+y)\} + (5+3y)/200].$$

7. Céramique semi-conductrice selon la revendication 1, dans laquelle l'agent conférant une semi-conductivité Smc est Nd, la céramique qui contient comme composant principal un composé représenté par une formule générale $(Ba_{1-(x+y+z)/100}Ca_{x/100}Sr_{y/100}Sm_{z/100})TiO_3$ la céramique contient Mn dans une proportion de t parties en mol par rapport à 100 parties en mol du composant principal, et x, y, z et t satisfont aux relations suivantes :

$$2{,}500 \leq x \leq 20{,}000;$$

$$0{,}000 \leq y \leq 5{,}000;$$

$$2{,}500 \leq x+y \leq 20{,}000;$$

$$0,030 \le t \le 0,150;$$

et

$$z \ge 0,42 \times [(30\text{-}x)(30\text{-}y)(1+15t)/\{125(20+y)\} + (5+3y)/200].$$

8. Thermistor à coefficient de température positif, comportant une paire d'électrodes externes formées sur une surface d'un corps de composant, dans laquelle le corps de composant est formé à partir de la céramique semi-conductrice selon une des revendications 1 à 7.

[Fig. 1]

**1**

[Fig. 2]

[Fig. 3]

[Fig. 4]

[Fig. 5]

**EP 2 695 869 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 4170361 A